# EUROPEAN PATENT SPECIFICATION

(11) **EP 2 769 825 B1**
(45) Date of publication and mention of the grant of the patent: **04.10.2017**
(21) Application number: 14155404.8
(22) Date of filing: 17.02.2014
(51) Int. Cl.: B29C 49/04, B29C 49/20, B29C 49/22, B29C 49/42, B29C 49/48, B29C 49/50, B29L 31/00

(54) **Blow molding process and apparatus**
Verfahren und Vorrichtung zum Blasformen
Processus de moulage par soufflage et appareil

(30) Priority: 25.02.2013 DE 102013203085; 19.12.2013 US 201314134607
(43) Date of publication of application: 27.08.2014
(73) Proprietor: TI Automotive Technology Center GmbH, 76437 Rastatt (DE)
(72) Inventor: Boecker, Albert J., 76275 Ettlingen (DE); Grauer, Peter, 76872 Steinweiler (DE); Dobmaier, Andreas W., 76137 Karlsruhe (DE); Ehler, Alex, 76437 Rastatt (DE); Gmünd, Patrick, 76149 Karlsruhe (DE); Michaelis, Gerrit, 76448 Durmersheim (DE); Olbrich, Matthias B., 76437 Rastatt (DE)
(74) Representative: Pfiz/Gauss Patentanwälte PartmbB

(56) References cited:
- EP-A2- 2 141 000
- US-A1- 2010 078 842
- US-A1- 2011 140 314

## Description

The present disclosure relates generally to a blow molding process and apparatus for making a fluid container, which in at least some implementations is a fuel tank for a vehicle.

Blow molding is a well-known process for making plastic products, in particular containers or hollow bodies such as fuel tanks. The process usually encompasses extruding a parison, which may consist of a plurality of layers of different material, and transporting the still hot parison to an open blow mold, where it is disposed between the blow mold halves. The blow mold halves are then closed, capturing the parison between them, and the interior of the parison is subjected to a pressure medium, thereby inflating the material of the parison against the inside walls of the blow mold and shaping it accordingly. Especially in the case of fuel tanks there is often a desire to form not only the tank itself, but also to position on the inside of the tank components of the fuel system, for example a fuel pump, a fuel filter, baffles to prevent or reduce sloshing of the fuel during operation of the vehicle, hoses for fuel and venting, and cabling for the electrical supply to the fuel pump. This poses some practical challenges. The present invention provides a method according to claim 1 and an apparatus according to claim 10. Preferred embodiments are defined in dependent claims 2-9 and 11-14. The clamping devices may be integrated into the blow mold and may be of a simpler mechanical design than a cutting mechanism of the type known from EP 2 141 000 A2 or US 2011/140314 A1. The tearing-apart of the parison is also quicker than the use of the known cutting mechanisms, so that the total process time is reduced and the productivity of the process is increased. Moreover, the tearing-apart may be performed along a complexly shaped contour. In at least some implementations, a further step in the process includes placing at least one object in between the torn apart pieces of the parison, for example a carrier for at least one fuel system component, such as a fuel pump, venting valves, baffles, hoses, and other objects typically used inside a fuel tank.

The clamping devices provided on each blow mold half may each comprise a groove, into which groove material of the parison is pressed in a bead-like manner when the parison is subjected to the gaseous pressure medium. Further, the clamping devices may each comprise a clamping element which is adapted to be displaced in an opening and closing direction of the blow mold parts, and a stop surface disposed opposite to the clamping element, wherein the groove is formed between the clamping element and the stop surface and wherein the clamping element is moved in the direction of the stop surface, or the stop surface in the direction of the blow mold, in order to facilitate the clamping of the material of the parison.

In at least some implementations, the blow mold halves are moved with respect to each other and an extruder is disposed adjacent to the blow mold, which extruder extrudes the parison of plastic material that is introduced into the blow mold. Especially in those cases where the extruder is not positioned above the blow mold and the parison is introduced into the blow mold by way of gravity, the parison may be introduced into the blow mold by means of a gripping device, which for example grips the parison by means of pneumatic suction members and transports it to the blow mold.

After tearing apart the preformed tank the thus created pieces of the parison may be placed against the parts of the blow mold and the space between the pieces and the parts of the blow mold can be evacuated, or the interior space of the parison subjected to a pressure medium while the blow mold is closed, in order to perform a forming of the pieces of the parison which corresponds to the final shape of the hollow body.

Expediently, the object is brought into contact, in a form-fitting and/or friction-fitting manner, with the inside of the wall of at least one of the pieces at least at specific locations before the blow mold parts are closed. To this end, the object may be made at least partially of a plastic material which can be welded, clamped or otherwise connected to at least one of the pieces of the parison. The remainder of the object may be made of any material suitable for the intended application, for example of fuel resistant material in the case of a fuel tank.

In a further process step the pieces of the parison are, after being fully formed against the parts of the blow mold, materially fused to each other with opposing edge regions, which regions are still molten-hot or which have been reheated, by moving the blow mold parts against each other. The finished product is then removed from the blow mold and processed further, as desired.

The apparatus for making a hollow body, in particular a fuel tank, by way of a blow molding process, comprises a blow mold that consists of at least two parts, the at least two parts of the blow mold having edge regions that are disposed in a complementary opposed relation to each other, wherein clamping mechanisms oriented toward the inner region of the blow mold are provided at the edge regions, each of which comprises a groove which is variable in its width by means of a clamping element.

In at least some implementations, the clamping element moves between first and second positions that correspond to open and clamped positions of the groove wherein the effective size of the groove is less in the clamped than open position. The groove is adapted to receive, in the open position, material of a molten-hot parison, and the clamping element is adapted to be displaced toward a stop surface of the clamping mechanism, thereby capturing the material of the parison in a form-fitting and/or friction-fitting manner in a clamped position. The clamping may alternatively be effected by moving the stop surface in the direction of the blow mold, or by moving both the stop surface and clamping element toward each other. The parts of the blow mold are adapted to be moved apart while the clamping mechanism is in its clamped position, thereby tearing the parison into two or more pieces.

Alternatively, the clamping element(s) is/are carried by one or more sliders that are movable relative to the parts of the blow mold and the parison tearing is accomplished by movement of the sliders relative to the parts of the blow mold, in at least some implementations, such tearing is accomplished without any accompanying movement of the parts of the blow mold.

An apparatus for making a hollow body, in particular a fuel tank, by a blow molding process, may include at least two parts which are adapted to be moved relative to each other between an opened position and a closed position to separate a parison of extruded plastic material into at least two pieces by means of the apparatus. Edge portions of the parison pieces are arranged on projections of the blow mold parts that are disposed at a plurality of locations in regions outside of the hollow body to be made (e.g. in scrap regions of the parison), in order to prevent a warping of the separated pieces in the opened position of the blow mold parts. For ease of installation, repair or replacement, the projections may be formed as pins screwed into screw holes in the blow mold parts.

The following detailed description of preferred embodiments and best mode will be set forth with reference to the accompanying drawings, in which:
- Figure 1a-c: is a side elevation of a clamping device for clamping and tearing a parison in a blow mold;
- Figure 2: is a section through one blow mold half in the region of the clamping device;
- Figure 3: is a perspective view of a blow mold half having clamping devices installed at two edge regions thereof; and
- Figure 4: is a side elevation of a clamping device where sliders are moved relative to blow mold parts to tear a parison.

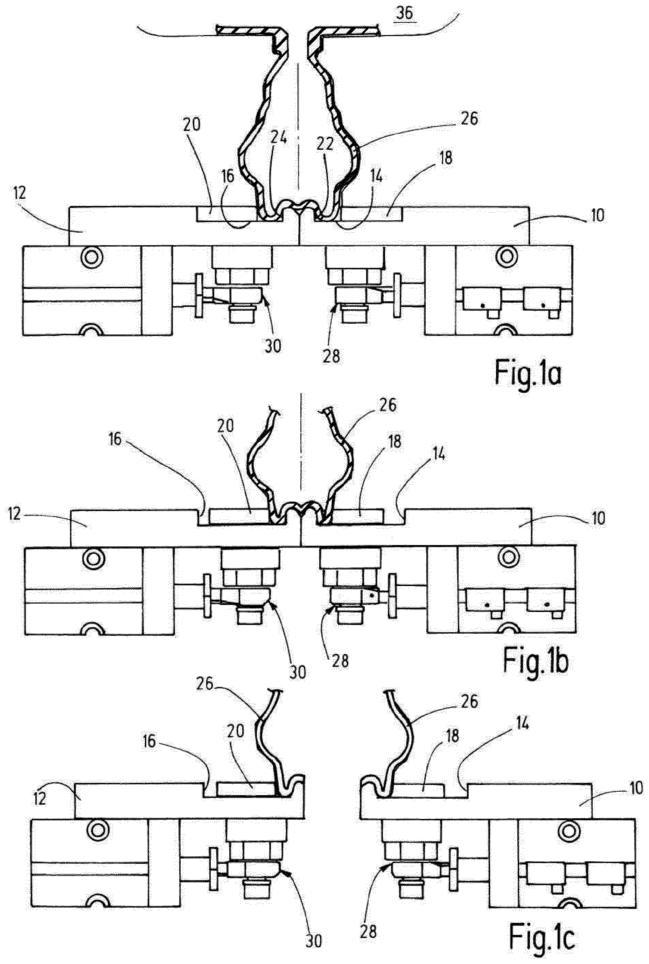

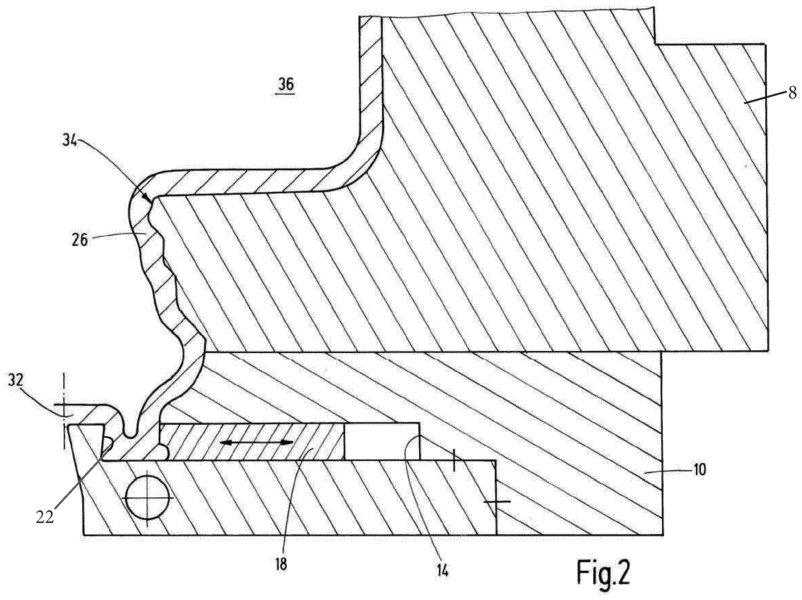

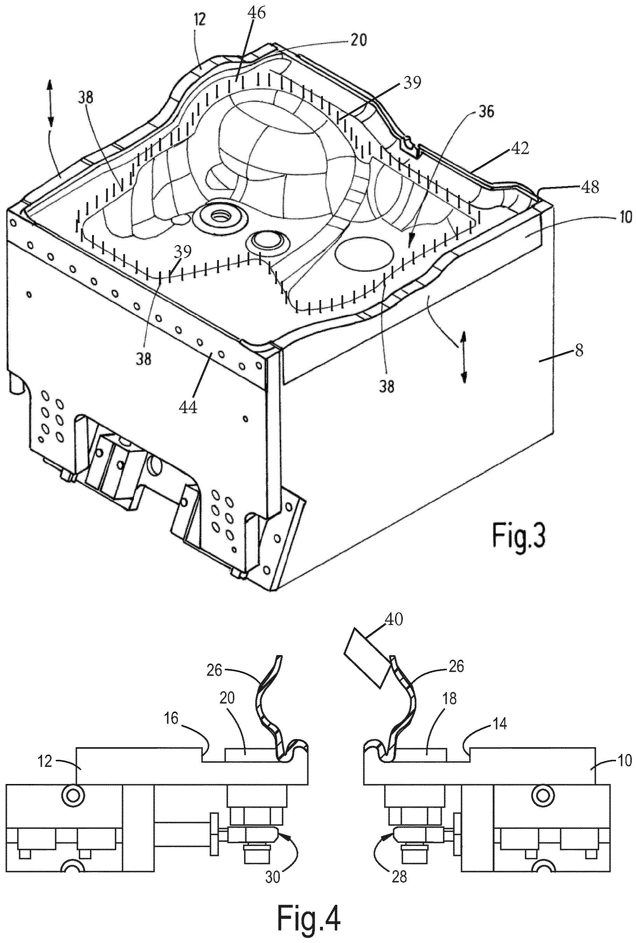

U.S. Patent Application Serial No. 12/491,964 filed June 25, 2009, discloses an apparatus and a process for forming a polymeric container by blow molding an extruded parison. The detailed process of extruding a plastic parison, locating it in a blow mold and expanding the parison material under pressure will not be further described herein. The process may be performed by an apparatus that generally includes two or more blow mold parts that define the final shape of the container and into which the parison is expanded to conform to the blow mold parts. In the implementation shown, two blow mold parts 8 (Figs. 2 and 3) are used and each may form about one-half of the container. The clamping device shown in Fig. 1 includes or is provided in sliders 10, 12 of a blow mold. The sliders 10, 12 may be associated with, such as by being carried by or adjacent to, the blow mold parts 8. The sliders 10, 12 are driven by an actuator or actuators 28, 30 for movement relative to the blow mold parts 8. In one implementation, a parison 26 may be received within a cavity 36 defined by the blow mold parts 8 and the blow mold parts may be partially closed. The sliders 10, 12 may be actuated to close off at least part of a gap that remains between the partially closed mold parts 8. Then, a pressurized medium may be provided into the parison 26 to provide an initial expansion of the parison 26 into the cavity 36 in what is sometimes called a pre-blow molding step.

Each slider 10, 12 may include a groove 14, 16 oriented such that it is open toward the interior region of the blow mold. In or adjacent to each groove 14, 16 there is disposed a clamping element 18, 20 adapted to be laterally displaced within or relative to the groove. A gap of variable width is thus formed between the clamping element 18, 20 and a stop surface 22, 24 of the slider, into which gap molten material of the parison 26 enters in a process step in which the parison is partially inflated (e.g. a pre-blow molding step). The clamping elements 18, 20 are then displaced in the direction of the stop surfaces 22, 24, so that the material of the parison 26 is captured in between. The actuation members 28, 30, for example a hydraulic or pneumatic cylinder, are provided on the exterior of and may be carried by the blow mold parts 8 for displacing the clamping elements 18, 20. When the blow mold is opened (Fig. 1c) and the clamping elements 18, 20 are engaged with the parison material, the material of the parison 26 is torn apart between the clamped portions along the contour of the clamping device (Fig. 3).

Optionally, as shown in Fig. 4, the sliders 10, 12 may be moved separately from and relative to the blow mold parts 8 to tear the parison 26, or the tearing movement may be a combination of mold part and slider movement. Further, sliders 10, 12 may be associated with each mold part 8 and only some of the sliders may be moved relative to other sliders to tear the parison 26 (for example, only the slider 10 on the right-hand side is shown as having moved in Fig. 4, although both sliders may move, or one slider and the opposed mold part may move, etc). That is, relative movement between two portions of the parison 26 can cause the tearing and that may be accomplished by any independent or combined movement of any of the sliders 10, 12 and blow mold parts 8.

Fig. 2 shows a section through part of one blow mold halves 8 in the region of its slider 10 (not shown is the actuation member for the clamping element 18). The tearing of the parison occurs in the region 32 of the parison 26, while the mating of the two tank halves occurs in the region designated by reference numeral 34, which creates the so-called pinch line. The tearing therefore occurs in a region removed from that part of the parison 26 which later forms the finished tank and in a region later removed from the formed tank. In at least some implementations, the tearing region 32 is outboard of the pinch line relative to the interior of the parison (i.e. on the other side of the pinch line from the interior of the parison). Consequently, there are no exacting demands regarding the quality of the tear line through the parison since, in at least some implementations, the torn material will not form part of the final fuel tank.

The lower half of a blow mold 8 shown in Fig. 3 features a cavity 36, the contour of which forms the shape of the corresponding tank half. At two opposed sides of the substantially rectangular blow mold sliders 10, 12 are provided, each having one or more clamping elements 18, 20, in the form of elongated, contoured bars. The bars are adapted to be displaced by means of actuation members, which, by way of only a few possibilities, may include pneumatic or hydraulic drives. During a first, partial inflation of the parison the molten material enters into the gap formed between the clamping elements 18, 20 and the sliders 10, 12, and is then captured therebetween by displacing the clamping elements. The second blow mold half (not shown) may be similarly formed and equipped with corresponding sliders and clamping devices. After the material of the parison 26 is thus captured, the blow mold halves 8 are moved apart, tearing the parison into two half-pieces (in this implementation - other implementations may provide more than two pieces). Once the parison 26 is separated into two or more pieces, the interior of those pieces may be accessed to mount one or more objects 40 (Fig. 4) and/or fuel system components thereon, provide a coating or other treatment, or form the interior surfaces (e.g. by pressing something into the surface) such as to provide a different contour for at least some portion of the interior surface for structural or other reasons.

Fig 3. further shows a plurality of screw holes 38 in a circumference region of the cavity 36. These screw holes are intended to accept screw pins 39 which protrude from the surface of the blow mold half 8. The material of the parison or half-pieces is anchored by these pins 39 before and after the tearing step, which hold the parison pieces in place relative to the blow mold parts 8, in particular when the blow mold is open. While described as screw holes 38 and screw pins 39, threaded connection is not required and other constructions may be used.

Accordingly, a blow molding process for making a hollow body, in particular a fuel tank, may include the following steps: placing a parison between parts of a blow mold, partially closing the blow mold, closing end regions of the parison in a gas tight manner, and subjecting the interior space of the parison with a gaseous pressure medium whereby the parison is at least partially pressed against the inner surfaces of the blow mold parts and the hollow body is preformed. Portions of the parison are engaged by the clamping devices disposed on the blow mold parts and the blow mold is opened whereby the parison is torn apart between the clamping devices, forming two half-pieces. Alternatively or in combination with movement of the blow mold parts, at least certain of the sliders may be moved relative to at least some of the blow mold to effect the tearing of the parison.

When the blow mold is partially closed, a space may exist between adjacent parts 8 of the blow mold and one or more sliders 10, 12 may be positioned in that space so that the clamping devices (e.g. groove and clamping element) are oriented to receive parison material as described. Sliders 10, 12 extending from adjacent blow mold parts 8 may at least partially close off the space between the blow mold parts to prevent or inhibit parison material from expanding or flowing between the sliders. Thus, the sliders 10, 12 may define part of an enclosure or cavity into which the parison 26 is expanded during a pre-blow molding step. This extended slider position is shown in Figs. 1a and 1b. A subsequent, final blow molding step may occur with the blow mold parts 8 closed together, and the sliders 10, 12 retracted relative to the blow mold parts so that the sliders do not form part of the final blow molding cavity 36 that defines the final molded shape of the container. Instead, in these implementations, the final blow molding cavity 36 is defined entirely by the blow mold parts 8. This retracted slider position is shown in Fig. 1c and Fig. 3. In these implementations, the volume of the final blow mold cavity is smaller than the volume of the pre-blow mold cavity that is defined in part by the sliders.

In at least certain implementations, the blow mold parts 8 may include upper and lower ends 42, 44 and opposed sides 46, 48 extending between the upper and lower ends. The sliders 10, 12 may be disposed along the sides 46, 48 of the blow mold such that movement of the sliders causes tearing of the sides of the parison 26. Similar sliders adjacent to the upper and lower ends of the mold parts may be used to tear the upper and lower ends of the parison, or the upper and lower ends of the parison may be severed (for example, by cutting with a blade) if desired. When the interior of the parison pieces are accessible, one or more objects 40 may be setup for inclusion at least partially within the formed tank. The object(s) may be coupled to the interior surface of at least one parison piece so that the object is at least partially, and may be fully, within the formed tank after final blow molding of the tank. The object(s) may be a fuel system component (e.g. pump, valve, baffle, tube or the like) or a carrier for at least one fuel system component, such as a fuel pump, attached thereto or attached thereto later after the tank is formed.

## Claims

1. A blow molding process for making a hollow body, in particular a fuel tank, comprising the following steps:
placing a parison (26) between parts of a blow mold (8);
at least partially closing the blow mold (8) whereby the end regions of the parison (26) are closed in a gas tight manner;
subjecting the interior space of the parison (26) with a pressure medium whereby the parison (26) is at least partially pressed against the blow mold parts (8) and the hollow body is preformed;
**characterized by**
engaging portions of the parison (26) with clamping devices;
moving one or both of the blow mold parts (8) relative to each other or at least one clamping device relative to the blow mold parts (8) whereby the parison (26) is torn between the clamping devices.

2. The process of claim 1 which also comprises placing at least one object (40) between the torn apart pieces of the parison (26).

3. The process of claim 2 wherein the object (40) is formed as a carrier for at least one fuel system component, such as a fuel pump, attached thereto.

4. The process of claim 1 wherein the clamping devices each comprise a groove (14, 16) into which groove material of the parison (26) is received when the parison (26) is subjected to the pressure medium.

5. The process of claim 4 wherein the clamping devices each comprise a clamping element (18, 20) which is adapted to be displaced relative to the blow mold parts (8), and a stop surface (22, 24) disposed opposite to the clamping element (18, 20), wherein the groove (14, 16) is formed between the clamping element (18, 20) and the stop surface (22, 24) and wherein one or both of the clamping element (18, 20) and the stop surface (22, 24) is moved relative to the other to facilitate the clamping of the material of the parison (26).

6. The process of claim 1 wherein at least one clamping device is moved to tear the parison (26) between two clamping devices without corresponding movement of the mold parts (8).

7. The process of claim 6 where two clamping devices are moved in opposed directions away from each other to tear a portion of the parison (26) between the clamping devices.

8. The process of claim 1 wherein the torn apart pieces of the parison (26) are placed against the parts of the blow mold (8) and the space between the half-pieces and the parts of the blow mold (8) is evacuated or an interior space of the parison is subjected to a pressure medium while the blow mold (8) is closed, in order to perform a forming of the pieces of the parison (26) which corresponds to the final shape of the hollow body.

9. The process of claim 1 where in a further process step the pieces of the parison (26) are, after being fully formed against the parts of the blow mold (8), materially fused to each other with opposing edge regions, which regions are still molten-hot or which have been reheated, by moving the blow mold parts (8) against each other.

10. Apparatus for making a hollow body by way of a blow molding process according to claim 1, comprising:
a blow mold (8) with at least two parts having edge regions that are disposed in a complementary opposed relation to each other;
**characterized by**
clamping devices oriented toward the inner region of the blow mold (8) and provided at the edge regions, each clamping device having a groove (14, 16) that is variable in its width by means of a clamping element (18, 20) that is movable from an open position to a clamped position to engage part of a parison (26) received within the groove (14, 16).

11. The apparatus of claim 10 wherein the parts of the blow mold (8) are adapted to be moved apart in the clamped position of the clamping devices, thereby tearing the parison (26) between at least two clamping devices.

12. The apparatus of claim 10 which also includes projections (39) of the mold parts (8) disposed at a plurality of locations in regions outside of the hollow body to be made to hold torn pieces of the parison (26) relative to the mold parts (8) when the mold parts (8) are moved to an open position.

13. The apparatus of claim 10 wherein at least one clamping device is movable relative to another clamping device to tear a portion of the parison (26) adjacent to the movable clamping device.

14. The apparatus of claim 13 wherein the movable clamping device is carried by or adjacent to one mold part (8) and is movable separately from and relative to the mold part (8) it is carried by or adjacent to.

## Patentansprüche

1. Blasformverfahren zur Herstellung eines Hohlkörpers, insbesondere eines Kraftstoffbehälters, umfassend die folgenden Schritte:
Anordnen eines Vorformlings (26) zwischen Teilen einer Blasform (8); mindestens teilweises Schließen der Blasform (8), wobei Endbereiche
des Vorformlings (26) in einer gasdichten Weise verschlossen werden;
Beaufschlagen des Innenraums des Vorformlings (26) mit einem Druckmedium, wodurch der Vorformling (26) mindestens teilweise gegen die Blasformteile (8) gedrückt und der Hohlkörper vorgeformt wird;
**gekennzeichnet durch**
Erfassen von Partien des Vorformlings (26) mit Klemmvorrichtungen;
Bewegen eines oder beider der Blasformteile (8) relativ zueinander oder mindestens einer Klemmvorrichtung relativ zu den Blasformteilen (8), wodurch der Vorformling (26) zwischen den Klemmvorrichtungen aufgerissen wird.

2. Verfahren nach Anspruch 1, **gekennzeichnet durch** ein Anordnen mindestens eines Objekts (40) zwischen den auseinander gerissenen Teilen des Vorformlings (26).

3. Verfahren nach Anspruch 2, **dadurch gekennzeichnet, dass** das Objekt (40) als Träger für mindestens eine daran angeordnete Kraftstoffsystemkomponente, beispielsweise eine Kraftstoffpumpe, ausgebildet ist.

4. Verfahren nach Anspruch 1, **dadurch gekennzeichnet, dass** die Klemmvorrichtungen jeweils eine Nut (14, 16) aufweisen, in der Material des Vorformlings (26) aufgenommen wird, wenn der Vorformling (26) mit dem Druckmedium beaufschlagt wird.

5. Verfahren nach Anspruch 4, **dadurch gekennzeichnet, dass** die Klemmvorrichtungen jeweils ein Klemmorgan (18, 20) aufweisen, welches relativ zu den Blasformteilen (8) verschiebbar ist, und eine Anschlagfläche (22, 24), die gegenüber den Klemmorganen (18, 20) angeordnet ist, wobei die Nut (14, 16) zwischen dem Klemmorgan (18, 20) und der Anschlagfläche (22, 24) ausgebildet ist und wobei eines oder beide der Klemmorgane (18, 20) und der Anschlagfläche (22, 24) gegenüber der anderen bewegt wird, um das Einklemmen des Materials des Vorformlings (26) zu bewirken.

6. Verfahren nach Anspruch 1, **dadurch gekennzeichnet, dass** mindestens eine Klemmvorrichtung bewegt wird, um den Vorformling (26) zwischen den zwei Klemmvorrichtungen aufzureißen, ohne entsprechende Bewegung der Blasformteile (8).

7. Verfahren nach Anspruch 6, **dadurch gekennzeichnet, dass** zwei Klemmvorrichtungen in gegenüberliegende Richtungen voneinander weg bewegt werden, um eine Partie des Vorformlings (26) zwischen den Klemmvorrichtungen aufzureißen.

8. Verfahren nach Anspruch 1, **dadurch gekennzeichnet, dass** die aufgerissenen Teile des Vorformlings (26) gegen die Teile der Blasform (8) positioniert werden und der Raum zwischen den Hälften und den Teilen der Blasform (8) evakuiert oder ein Innenraum des Vorformlings mit einem Druckmedium beaufschlagt wird, während die Blasform (8) geschlossen wird, um eine Formung der Teile des Vorformlings (26) zu bewirken, die der Endform des Hohlkörpers entspricht.

9. Verfahren nach Anspruch 1, **dadurch gekennzeichnet, dass** in einem weiteren Verfahrensschritt die Teile des Vorformlings (26) nach einem vollständigen Ausformen gegen die Teile der Blasform (8) materialschlüssig an einander gegenüberliegenden Randbereichen miteinander verschweißt werden, während diese Bereiche noch schmelzwarm oder nacherhitzt sind, indem die Blasformteile (8) gegeneinander bewegt werden.

10. Vorrichtung zur Herstellung eines Hohlkörpers mittels eines Blasformverfahrens nach Anspruch 1, umfassend:
eine Blasform (8) mit mindestens zwei Teilen, die einander gegenüberliegende Randbereiche aufweisen;
**gekennzeichnet durch**
Klemmvorrichtungen, die in Richtung eines Innenraums der Blasform (8) ausgerichtet sind und an den Randbereichen angeordnet sind, wobei jede Klemmvorrichtung eine Nut (14, 16) aufweist, die in ihrer Breite mittels eines Klemmorgans (18, 20) veränderbar ist, das von einer Offenstellung in eine Klemmstellung bewegbar ist, um einen in der Nut (14, 16) aufgenommenen Teil des Vorformlings (26) zu ergreifen.

11. Vorrichtung nach Anspruch 10, **dadurch gekennzeichnet, dass** die Teile der Blasform (8) in der Klemmstellung der Klemmvorrichtungen auseinander bewegbar sind, wodurch der Vorformling (26) zwischen den mindestens zwei Klemmvorrichtungen aufgerissen wird.

12. Vorrichtung nach Anspruch 10, **gekennzeichnet durch** Vorsprünge (39) der Blasformteile (8), die an einer Vielzahl von Orten in Bereichen außerhalb des herzustellenden Hohlkörpers angeordnet sind, um die aufgerissenen Teile des Vorformlings (26) an den Blasformteilen (8) zu halten, wenn die Blasformteile (8) in eine Öffnungsstellung bewegt werden.

13. Vorrichtung nach Anspruch 10, **dadurch gekennzeichnet, dass** mindestens eine Klemmvorrichtung bezüglich der anderen Klemmvorrichtung bewegbar ist, um eine Partie des Vorformlings (26) benachbart zu der beweglichen Klemmvorrichtung aufzureissen.

14. Vorrichtung nach Anspruch 13, **dadurch gekennzeichnet, dass** die bewegbare Klemmvorrichtung an oder benachbart zu einem Blasformteil (8) angeordnet ist und unabhängig und relativ zu dem Blasformteil (8) bewegbar ist, an oder neben dem sie angeordnet ist.

## Revendications

1. Processus de moulage par soufflage pour créer un corps creux, en particulier un réservoir de carburant, comprenant les étapes consistant à :
placer une paraison (26) entre des parties d'un moule de soufflage (8) ;
fermer au moins partiellement le moule pour soufflage (8) moyennant quoi les régions d'extrémité de la paraison (26) sont fermées d'une manière étanche aux gaz ;
soumettre l'espace intérieur de la paraison (26) à un agent de pression moyennant quoi la paraison (26) est au moins partiellement pressée contre les parties de moule pour soufflage (8) et le corps creux est préformé ;
**caractérisé par**
l'entrée en prise de parties de la paraison (26) avec des dispositifs de serrage ;
le déplacement de l'une ou des deux parties de moule pour soufflage (8) l'une par rapport à l'autre ou d'au moins un dispositif de serrage par rapport aux parties de moule pour soufflage (8) moyennant quoi la paraison (26) est déchirée entre les dispositifs de serrage.

2. Processus selon la revendication 1 qui comprend également le placement d'au moins un objet (40) entre les pièces déchirées de la paraison (26).

3. Processus selon la revendication 2 dans lequel l'objet (40) est formé comme support pour au moins un composant de système de carburant, tel qu'une pompe à carburant, fixé à celui-ci.

4. Processus selon la revendication 1 dans lequel les dispositifs de serrage comprennent chacun une rainure (14, 16) dans laquelle rainure est reçu un matériau de la paraison (26) quand la paraison (26) est soumise à l'agent de pression.

5. Processus selon la revendication 4 dans lequel les dispositifs de serrage comprennent chacun un élément de serrage (18, 20) qui est adapté pour être déplacé par rapport aux parties de moule pour soufflage (8), et une surface de butée (22, 24) disposée à l'opposé de l'élément de serrage (18, 20), dans lequel la rainure (14, 16) est formée entre l'élément de serrage (18, 20) et la surface de butée (22, 24) et dans lequel l'un ou les deux parmi l'élément de serrage (18, 20) et la surface de butée (22, 24) sont déplacés l'un par rapport à l'autre afin de faciliter le serrage du matériau de la paraison (26).

6. Processus selon la revendication 1 dans lequel au moins un dispositif de serrage est déplacé pour déchirer la paraison (26) entre deux dispositifs de serrage sans déplacement correspondant des parties de moule (8).

7. Processus selon la revendication 6 où deux dispositifs de serrage sont déplacés dans des directions opposées loin l'un de l'autre afin de déchirer une partie de la paraison (26) entre les dispositifs de serrage.

8. Processus selon la revendication 1 dans lequel les pièces déchirées de la paraison (26) sont placées contre les parties du moule pour soufflage (8) et l'espace situé entre les demi-pièces et les parties du moule pour soufflage (8) est évacué ou un espace intérieur de la paraison est soumis à un agent de pression alors que le moule pour soufflage (8) est fermé, afin de réaliser un formage des pièces de la paraison (26) qui correspond à la forme finale du corps creux.

9. Processus selon la revendication 1 où, lors d'une autre étape de processus, les pièces de la paraison (26) sont, après avoir été entièrement formées contre les parties du moule pour soufflage (8), matériellement fusionnées les unes avec les autres avec des régions de bord opposées, lesquelles régions sont toujours en fusion à chaud ou lesquelles ont été réchauffées, en déplaçant les parties de moule pour soufflage (8) l'une contre l'autre.

10. Appareil pour créer un corps creux par le biais d'un processus de moulage par soufflage selon la revendication 1, comprenant :
un moule pour soufflage (8) pourvu d'au moins deux parties ayant des régions de bord qui sont disposées selon une relation mutuelle d'opposition complémentaire ;
**caractérisé par** des dispositifs de serrage orientés vers la région intérieure du moule pour soufflage (8) et situés au niveau des régions de bord, chaque dispositif de serrage ayant une rainure (14, 16) dont la largeur est variable à l'aide d'un élément de serrage (18, 20) qui est mobile depuis une position ouverte vers une position serrée afin d'entrer en prise avec une partie d'une paraison (26) reçue dans la rainure (14, 16).

11. Appareil selon la revendication 10 dans lequel les parties du moule pour soufflage (8) sont adaptées pour s'écarter dans la position serrée des dispositifs de serrage, déchirant ainsi la paraison (26) entre au moins deux dispositifs de serrage.

12. Appareil selon la revendication 10 qui inclut également des saillies (39) des parties de moule (8) disposées au niveau d'une pluralité d'emplacements dans des régions se trouvant à l'extérieur du corps creux à créer pour maintenir les pièces déchirées de la paraison (26) par rapport aux parties de moule (8) quand les parties de moule (8) sont déplacées jusqu'à une position ouverte.

13. Appareil selon la revendication 10 dans lequel au moins un dispositif de serrage est mobile par rapport à un autre dispositif de serrage afin de déchirer une partie de la paraison (26) adjacente au dispositif de serrage mobile.

14. Appareil selon la revendication 13 dans lequel le dispositif de serrage est porté par ou adjacent à une partie de moule (8) et peut se déplacer séparément depuis et par rapport à la partie de moule (8) par laquelle il est porté ou à laquelle il est adjacent.
